Europäisches Patentamt

European Patent Office

Office européen des brevets

(19)

(11) Veröffentlichungsnummer: **0 086 332**
**B1**

(12) **EUROPÄISCHE PATENTSCHRIFT**

(45) Veröffentlichungstag der Patentschrift:
19.06.85

㉑ Anmeldenummer. 83100225.8

㉒ Anmeldetag· 13.01.83

(51) Int. Cl.⁴: **A 01 D 55/00, F 15 B 13/02**

(54) **Druckmittelkreislauf, insbesondere für ein Mähwerk.**

(30) Priorität: 03.02.82 DE 3203465

(43) Veröffentlichungstag der Anmeldung:
24.08.83 Patentblatt 83/34

(45) Bekanntmachung des Hinweises auf die Patenterteilung:
19.06.85 Patentblatt 85/25

(84) Benannte Vertragsstaaten:
AT DE FR GB IT

(56) Entgegenhaltungen:
DE - A - 1 926 894
DE - U - 7 725 445

(73) Patentinhaber: **Klöckner-Humboldt-Deutz
Aktiengesellschaft,
Deutz-Mülheimer-Strasse 111 Postfach 80 05 09,
D-5000 Köln 80 (DE)**

(72) Erfinder: **Adams, Heribert, Dipl.-Landwirt, Eigen 34,
D-5064 Rösrath (DE)**

EP 0 086 332 B1

Anmerkung· Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf einen Druckmittelkreislauf, insbesondere für ein Mähwerk an einem Ackerschlepper, mit zumindest zwei durch je einen Steuerschieber betätigbare Verbraucher und mit einer dessen Druckmittelversorgung übernehmenden Druckmittelpumpe, die mit ihrer Druckleitung unmittelbar an ein Dreiwege-Stromregelventil angeschlossen ist, dessen Ausgänge für einen konstanten Druckmittelstrom sowie einen Reststrom mit zwei getrennten Zweigen des hydraulischen Kreislaufs zur Druckmittelspeisung der diesen zugeordneten Verbrauch verbunden sind.

Bei einem hydraulischen Kreislauf dieser Gattung gemäß dem DE-G-7 725 445 werden von der einzigen Druckmittelpumpe über ein Dreiwege-Stromregelventil zwei hydraulische Zweige mit einem bzw. drei Verbrauchern mit Druckmittel versorgt. Dabei wird der Hauptverbraucher, der den größten Bedarf an Druckmittel hat, von dem den Reststrom führenden Zweig des Dreiwege-Stromregelventils versorgt, während die übrigen drei Verbraucher, die nur zeitweise eingeschaltet werden, mit dem den Konstantstrom führenden Zweig verbunden sind. Der Konstantstrom ist bei dem hier verwendeten Stromregelventil hinsichtlich seiner Fördermenge fest eingestellt, so daß die Zahl der anzuschließenden Verbraucher eng begrenzt ist. Hierdurch ist für die bekannte Einrichtung nur ein sehr enger Einsatzbereich gegeben. Außerdem wird der Konstantstrom nur unzureichend genutzt, da dieser bei nichteingeschalteten Kurzzeitverbrauchern über die diesen zugeordnete Wegeventile ungenutzt wieder zum Vorratsbehälter zurückströmt. Ein anderer Nachteil der bekannten Einrichtung liegt darin, daß die den Konstantstrom führende Leitung kein Druckbegrenzungselement aufweist. Der Druck kann daher beispielsweise bei einem voll ausgefahrenen Zylinder als Kurzzeitverbraucher in unzulässiger Weise ansteigen, was im Stromregelventil dazu führt, daß der den Hauptverbraucher versorgende Reststrom vermindert bzw. ganz unterbrochen wird.

Ausgehend von diesen Erkenntnissen liegt der Erfindung die Aufgabe zugrunde, einen Druckmittelkreislauf der eingangs umrissenen Gattung zu schaffen, bei dem die Konstantstrommenge im Bereich der gegebenen Möglichkeit wählbar sowie der Druck des Konstantstromes gegen unzulässiges Anwachsen gesichert ist und bei der ferner der Konstantstrom auch bei nicht zugeschalteten Verbrauchern gut genutzt wird.

Die Aufgabe wird erfindungsgemäß dadurch gelöst, daß das Dreiwege-Stromregelventil hinsichtlich der Konstantmenge einstellbar ausgebildet ist und daß die den Konstantstrom führende Leitung ein Druckbegrenzungsventil aufweist, dessen Rückflußleitung ebenso wie die Rückflußleitungen des oder der im Konstantstrom liegenden Steuerschieber für die diesen zugeordneten Verbraucher mit der den Reststrom in den anderen Zweig des hydraulischen Kreislaufs führenden Leitung verbunden ist.

Durch die Einstellbarkeit der Konstantstrommenge ist die Möglichkeit gegeben, bei Bedarf wahlweise einen oder mehrere Kurzzeitverbraucher vom Konstantstrom zu betreiben, ohne dadurch die Versorgung des vom Reststrom betätigten Hauptverbrauchers zu gefährden. Zudem ist vorgesehen, daß die für Kurzzeitverbraucher jeweils nicht benötigte Konstantstrommenge der Reststrommenge zur Speisung des Hauptverbrauchers zugeführt wird. Dabei sorgt das Druckbegrenzungsventil dafür, daß das für die Regelfähigkeit des Dreiwege-Stromregelventils notwendige Druckgefälle an der Meßblende durch Aufrechterhalten des Stromes stets vorhanden ist. Dabei wird zur guten Ausnutzung der gesamten Pumpenfördermenge auch der am Druckbegrenzungsventil abströmende Anteil des Druckmittels ebenfalls dem Reststrom zur Speisung des Hauptverbrauchers wieder zugeleitet.

In weiterer Ausgestaltung der Erfindung bildet das Druckwege-Stromregelventil insbesondere aus raumsparenden Gründen mit dem Druckbegrenzungsventil eine Baueinheit.

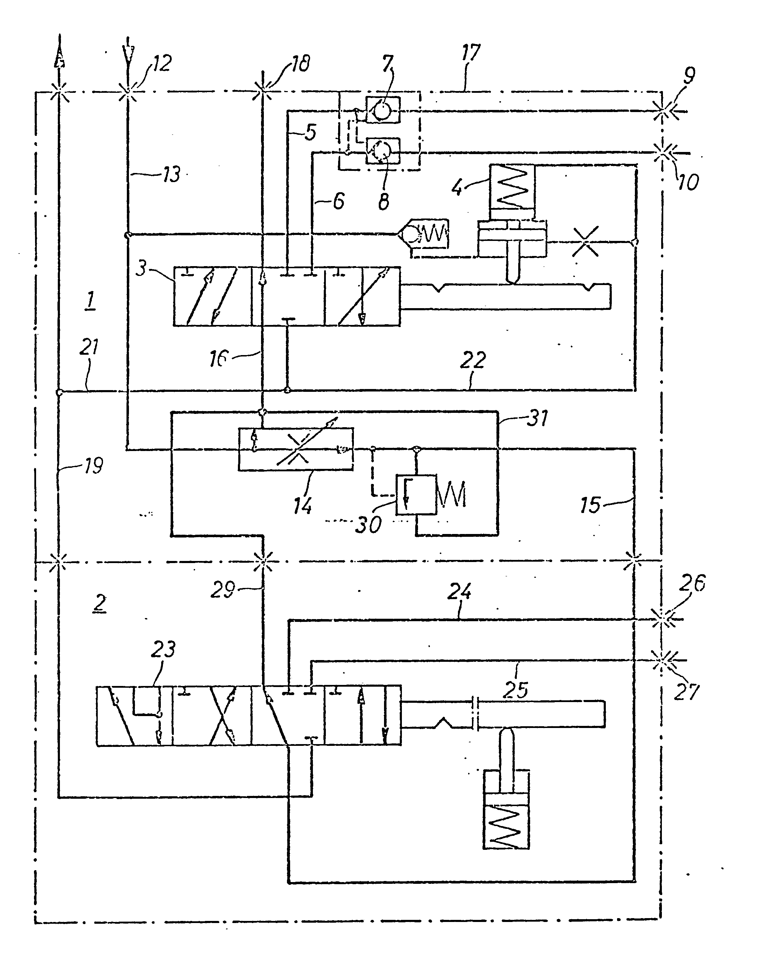

Die Erfindung wird im folgenden anhand eines Ausführungsbeispiels unter Bezugnahme auf die Zeichnung näher beschrieben.

Die einzige Abbildung zeigt schematisch einen hydraulischen Kreislauf gemäß der Erfindung mit einem Dreiwege-Stromregelventil, einem Druckbegrenzungsventil für den Konstantstrom und zwei Steuerschieber für die anzuschließenden Verbraucher.

Die hydraulische Einrichtung setzt sich aus mehreren Blockelementen 1, 2 zusammen und kann durch den Anbau weiterer Blockelemente beliebig erweitert werden. Im Blockelement 1 ist als Steuerschieber ein Mehrwegeschieber 3 angeordnet, der durch eine hydraulische Raste 4 in den beiden Schaltstellungen außerhalb der mittleren Neutralstellung festlegbar ist. Vom Mehrwegeschieber 3 führen zwei Leitungen 5 und 6 über gegenseitig beeinflußte Rückschlagventile 7 und 8 und über lösbare Schlauchkupplungen 9 und 10 zu einem nicht dargestellten Hauptverbraucher, der beispielsweise als Hydromotor ausgebildet sein kann. Der Zulauf des Druckmittels zum Blockelement 1 von einer nicht dargestellten Druckmittelpumpe ist mit 12 bezeichnet und steht durch eine Leitung 13 mit dem Eingang eines Dreiwege-Stromregelventils 14 in Verbindung. Zwischen die Druckmittelpumpe und den Zulauf 12 ist ein ebenfalls nicht dargestelltes primäres Druckbegrenzungsventil geschaltet, das das gesamte hydr. System absichert. An das Stromregelventil 14 sind ausgangsseitig zwei Leitungen 15 und 16 angeschlossen, von denen die Leitung 15 für einen Konstantstrom und die Leitung 16 für einen Reststrom vorgesehen ist. Die den Reststrom vom Stromregelventil 14 abführende Leitung 16 ist mit dem Mehrwegeschieber 3 verbunden und führt darüber hinaus bis zur Flanschfläche 17, die bei Bedarf den Anschluß eines weiteren Blockelements gestattet. Bei der gezeigten Ausführungsform ohne zusätzliches Blockelement ist die Leitung 16 am Anschluß 18 in nicht gezeigter Weise mit dem ebenfalls nicht dargestellten Vorratsbehälter für Druckmittel verbunden. Auch eine Leitung 19 für den Rücklauf von Druckmittel, die durch eine abzweigende Leitung 21 und eine daran anschließende Leitung 22 mit dem Mehrwegeschieber 3 bzw. der hydraulischen Raste 4 verbunden ist, führt außerhalb der Blockelemente 1 und 2 zum genannten Vorratsbehälter.

Das Dreiwege-Stromregelventil 14 ist im Hinblick auf den durch die ausgangsseitige Leitung 15 abfließenden Konstantstrom einstellbar ausgebildet, so daß dieser im Rahmen der gegebenen Möglichkeiten den jeweiligen Anforderungen angepaßt werden kann. Im vorliegenden Fall ist der Anschluß nur eines Verbrauchers vorgesehen, für den im Blockelement 2 als Steuerschieber ein mit der Leitung 15 verbundener Mehrwegeschieber 23 angeordnet ist. Dieser Mehrwegeschieber 23 steht durch zwei Leitungen 24 und 25 und lösbare Schlauchkupplungen 26, 27 mit dem nicht dargestellten Kurzzeitverbraucher sowie durch Leitung 19 mit dem Rücklauf in Verbindung. Dabei ist die Anordnung so getroffen, daß bei der gezeigten Neutralstellung des Mehrwegeschiebers 23 die an diesen eingangsseitig herangeführte Leitung 15 in Strömungsrichtung hinter demselben mit einer Leitung 29 in Verbindung steht, die andererseits an die den Reststrom führende Leitung 16 angeschlossen ist. Selbstverständlich ist auch auf der Konstantstromseite dieser Einrichtung die Möglichkeit gegeben, zur Versorgung mehrerer Verbraucher die für diese vorgesehenen Schieber dem im Blockelement 2 angeordneten Mehrwegeschieber 23 hydraulisch in Reihenschaltung zuzuordnen. Im Blockelement 1 ist an die Leitung 15 ein Druckbegrenzungsventil 30 angeschlossen, dessen Abströmleitung 31 ebenfalls mit der Leitung 16 in Verbindung steht.

Beim Betrieb der Einrichtung wird dieser durch die Leitung 13 von einer Pumpe Druckmittel zugeführt, das im Dreiwege-Stromregelventil 14 in einen durch die Leitung 15 strömenden Konstantstrom sowie einen in die Leitung 16 gelangenden Reststrom aufgeteilt wird. Bei Neutralstellung beider Mehrwegeschieber 3 und 23 gelangt die durch die Leitung 15 strömende konstante Druckmittelmenge durch den Mehrwegeschieber 23 und Leitung 29 in die Leitung 16 und strömt von hier vereint mit der Restmenge zurück zum Vorratsbehälter. Wird mit dem Mehrwegeschieber 3 ein an die Schlauchkupplungen 9 und 10 angeschlossener Verbraucher, beispielsweise ein Hydromotor zugeschaltet, dann wird dieser nicht nur von der vom Dreiwege-Stromregelventil 14 abgezweigten Restmenge der Gesamtfördermenge versorgt, sondern es gelangt auch die Konstantmenge durch die Leitung 15, den Mehrwegeschieber 23 und Leitung 29 in die Leitung 16, so daß die Gesamtfördermenge dem an die Schlauchkupplungen 9 und 10 angeschlossenen Hauptverbraucher zur Verfügung steht. Bei Zuschaltung des an die Schlauchkupplungen 26 und 27 angeschlossenen Verbrauchers, beispielsweise eines Zylinders, durch Betätigung des Mehrwegeschiebers 23, wird der Konstantstrom für die Versorgung dieses Verbrauchers benötigt und steht somit für kurze Zeit dem Hauptverbraucher nicht zur Verfügung. Dabei sorgt das Druckbegrenzungsventil 30 dafür, daß bei gleichzeitiger Versorgung des Hauptverbrauchers und des Konstantstromverbrauchers die Funktionstätigkeit des Stromreglers auch bei blockierter Leitung 15, z. B. bei beendetem Zylinderhub, aufrechterhalten wird.

Der dem Hauptverbraucher zufließende Reststrom wird nicht nachteilig beeinflußt sondern vielmehr um die vom Druckbegrenzungsventil 30 abfließende Druckmittelmenge ergänzt.

## Patentansprüche

1. Druckmittelkreislauf, insbesondere für ein Mähwerk an einem Ackerschlepper, mit zumindest zwei durch je einen Steuerschieber (3 bzw. 23) betätigbare Verbraucher und mit einer dessen Druckmittelversorgung übernehmenden Druckmittelpumpe, die mit ihrer Druckleitung (13) unmittelbar an ein Dreiwege-Stromregelventil angeschlossen ist, dessen Ausgänge (15 und 16) für einen konstanten Druckmittelstrom sowie einen Reststrom mit zwei getrennten Zweigen des hydraulischen Kreislaufs zur Druckmittelspeisung der diesen zugeordneten Verbraucher verbunden sind, dadurch gekennzeichnet, daß das Dreiwege-Stromregelventil (14) hinsichtlich der Konstantstrommenge einstellbar ausgebildet ist und daß die den Konstantstrom führende Leitung (15) ein Druckbegrenzungsventil (30) aufweist, dessen Abströmleitung (31) ebenso wie die Abströmleitungen (29) des oder der im Konstantstrom liegenden Steuerschieber (23) für die diesem zugeordneten Verbraucher mit der den Reststrom in den anderen Zweig des hydraulischen Kreislaufs führenden Leitung (16) verbunden ist.

2. Druckmittelkreislauf nach Anspruch 1, dadurch gekennzeichnet, daß das Dreiwege-Stromregelventil (14) mit dem Druckbegrenzungsventil (30) eine Baueinheit bildet.

## Claims

1. A pressure fluid circuit — especially for a mowing implement attached to a farm tractor — including at least two fluid-consuming devices each being operable by means of its respective control valve spool (3 and 23 respectively) and including a pressure medium pump arranged to feed the pressure medium to the circuit and being directly connected by its feed duct (13) to a three-way flow-regulating valve the outlets (15 and 16) — one for constant pressure fluid flow and the other for residual flow — of which are connected to two separate branches of the hydraulic circuit so as to feed the pressure fluid to the consuming devices associated with these branches, characterized in that the three-way flow-regulating valve (14) is adjustable for regulating the quantity of the constant flow, and in that the duct (15) carrying the constant flow includes a pressure-relief valve (30) the discharge duct (31) of which is connected, like the discharge duct or ducts (29) of the constant flow control valve spool or spools (23) for the consuming devices associated therewith, to the duct (16) which carries the residual flow into the other branch of the hydraulic circuit.

2. A pressure fluid circuit according to claim 1, characterized in that the three-way flow-regulating valve (14) and the pressure-relief valve (30) are combined as a single structural unit.

**Revendications**

1. Circuit pour fluide sous pression, notamment pour une barre de coupe sur un tracteur agricole, avec au moins deux dispositifs utilisateurs susceptibles d'être actionnés chacun par un tiroir de commande (3 ou 23) et avec une pompe de fluide sous pression assurant l'alimentation en fluide sous pression de ces dispositifs, et qui est directement raccordée par sa canalisation de refoulement (13) à une vanne à trois voies de régulation du débit, dont les sorties (15 et 16) pour un débit constant de fluide sous pression, ainsi qu'un débit résiduel sont reliées à deux ramifications distinctes du circuit hydraulique pour l'alimentation en fluide sous pression des dispositifs utilisateurs associés à ce circuit, circuit caractérisé en ce que la soupape à trois voies de régulation du débit (14) est susceptible d'être réglée en ce qui concerne l'importance du débit constant et que la canalisation (15) par laquelle passe le débit constant, comporte une soupape de limitation de la pression (30) dont la canalisation d'évacuation (31) tout comme les canalisations d'évacuation (29) d'au moins un tiroir de commande (23) placé sur ce débit constant pour les dispositifs utilisateurs associés à ce circuit, est reliée à la canalisation (16) dans laquelle passe le débit résiduel dans l'autre ramification du circuit hydraulique.

2. Circuit pour fluide sous pression selon la revendication 1, caractérisé en ce que la soupape à trois voies de régulation du débit (14) forme avec la soupape de limitation de la pression (30) une unité constitutive.